# EUROPÄISCHE PATENTANMELDUNG

(11) **EP 0 929 198 A1**
(43) Veröffentlichungstag der Anmeldung: **14.07.1999**
(21) Anmeldenummer: 98100375.9
(22) Anmeldetag: 12.01.1998
(51) Int. Cl.: H04N 7/18, A42B 3/30

(54) **Einrichtung zur Bedienerfernführung**

(71) Anmelder: AQS Automations- und Qualitäts Systeme AG, 7203 Trimmis (CH)
(72) Erfinder: Krättli, Christian, 7203 Untervaz (CH)
(74) Vertreter: Torggler, Paul Norbert

(57) **Zusammenfassung**

Eine Einrichtung zur Bedienerfernführung weist bedienerseitig ein Bildaufnahmegerät (3) und eine Gegensprecheinrichtung (11), und führungsseitig ein Bildbetrachtungsgerät (13) und ebenfalls eine Gegensprecheinrichtung (15) auf. Die Signalübertragung zwischen den bedienerseitigen und den führungsseitigen Geräten (3, 13; 11, 15) umfaßt einen drahtlosen Übertragungsabschnitt (16), in dem Sprachsignale und Bildsignale über getrennte Kanäle (17, 18) des GSM-Netzes übertragen werden.

## Beschreibung

Die Erfindung betrifft eine Einrichtung zur Bedienerfernführung.

Bei der Installation, Bedienung, Reparatur usw. der verschiedensten Einrichtungen treten immer wieder Schwierigkeiten aller Art auf, die außerhalb der Behebungsmöglichkeiten des Installations-, Bedienungs- oder Servicepersonals liegen. Diese Schwierigkeiten sind einerseits auf Bedienungsfehler und andererseits auf Gerätefehler zurückzuführen, wobei aber in jedem Fall fremde Hilfe notwendig erscheint, um die Ursachen des Problems abzuklären, geeignete Lösungswege zu suchen und die ermittelten Maßnahmen auch auszuführen. Sehr oft handelt es sich hierbei um geringfügige, leicht auszuführende Handgriffe oder Arbeitsschritte, zu deren Ausführung nur der gedankliche Anstoß bzw. Hinweis fehlt, beispielsweise wie eine Verkleidung eines Gerätes abnehmbar ist, welche Taste als Starttaste eines Diagnose- oder Installationsvorganges zu betätigen ist. Die Kommunikation über Telefon zwischen dem Bediener und der kompetenten Stelle ist zwar möglich, meist jedoch schwierig, da erste Mißverständnisse bereits in der Formulierung der Frage und die nächsten Mißverständnisse bei der Umsetzung der Antworten auftreten.

Die Erfindung schlägt nun für die Behebung zumindest des Großteils dieser Probleme eine Einrichtung vor, die bedienerseitig ein Bildaufnahmegerät und eine Gegenspeichereinrichtung, und führungsseitig ein Bildbetrachtungsgerät und ebenfalls eine Gegensprecheinrichtung aufweist, wobei die Signalübertragung zwischen den bedienerseitigen und den führungsseitigen Geräten zumindest einen drahtlosen Übertragungsabschnitt umfaßt.

Auf diese Weise können nicht nur, wie bisher, dem Bediener Anweisungen übermittelt, sondern auch gleichzeitig deren Ausführung mitverfolgt werden. Der mitsehende Bedienerführer kann nicht nur Fehlgriffen oder Fehlmaßnahmen des Bedieners vorbeugen oder diese sofort korrigieren, sondern kann sich auch an der Erkennung des Problems beteiligen, und dessen Lösung miterarbeiten, wobei die Mitsicht eine Diskussion wesentlich erleichtert bzw. erst möglich macht. Vorteilhaft werden die Sprachsignale von den Bildsignalen getrennt über eigene Sende/Empfangskanäle übertragen.

Die Führung der als Bildaufnahmegerät vorgesehenen Videokamera kann durch den Bediener erfolgen, es ist jedoch günstig, wenn auch dies der Bedienerführer übernimmt, da einerseits der Bedienerführer dadurch unmittelbar jene Kameraeinstellungen wählen kann, die ihm die gewünschten bzw. benötigten Bilder zeigen, und andererseits der Bediener seine Tätigkeiten besser auf die Problembehebung konzentrieren kann. Hierfür wird bevorzugt vorgeschlagen, daß führungsseitig eine Steuereinheit für das Bildaufnahmegerät vorgesehen ist. Sind getrennte Übertragungskanäle für die Sprach- und die Bildsignale ausgebildet, so erfolgt die Übertragung der Steuersignale vorzugsweise über den Bildübertragungskanal.

Für die Übertragung der Daten sind bedienerseitig bevorzugt zwei GSM-Geräte vorgesehen, sodaß die Einrichtung nicht nur mobil einsetzbar sondern auch mit relativ preisgünstigen handelsüblichen Geräten ausgerüstet ist.

Die Bilddaten werden insbesondere über ein GSM-Daten-Modem übertragen, wobei bevorzugt zwischen dem Bildaufnahmegerät und dem zugeordneten GSM-Gerät ein Interface vorgesehen ist, das einen Bildspeicher und einen Kompressionsblock umfaßt, sodaß die Bilddatenrate der GSM-Datenübertragungsrate angepaßt wird.

In einer weiteren bevorzugten Ausführung ist vorgesehen, daß alle bedienerseitigen Geräte an einem Kopfhörer oder Helm angeordnet sind, der vom Bediener aufgesetzt wird.

Nachstehend wird nun die Erfindung an Hand der Figuren der beiliegenden Zeichnungen näher beschrieben, ohne darauf beschränkt zu sein.

Es zeigen:

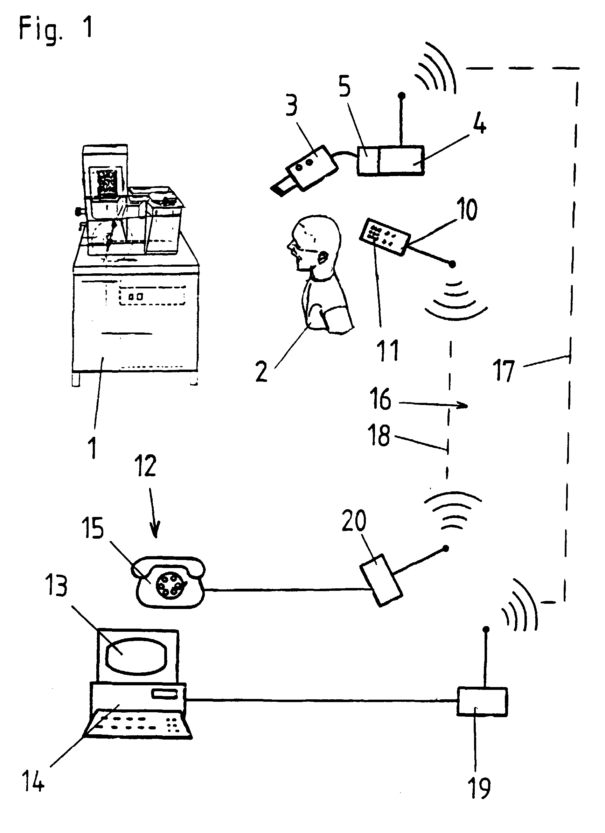

- Fig. 1: eine schematische Übersichtsdarstellung der erfindungsgemäßen Einrichtung,
- Fig. 2: ein Blockschaltbild des bedienerseitigen Teiles der Einrichtung, und
- Fig. 3: ein bevorzugtes Ausführungsbeispiel des bedienerseitigen Teiles der Einrichtung.

Für Beratung und Führung einer als Bediener 2 bezeichneten Person bei der Installation, Bedienung, Reparatur od.dgl. eines beliebigen Gerätes 1 ist eine Einrichtung vorgesehen, die es einer zweiten, an einer entfernten Leitstelle 12 anwesenden Person ermöglicht, die Handlungen des Bedieners zu sehen und zu beeinflussen.

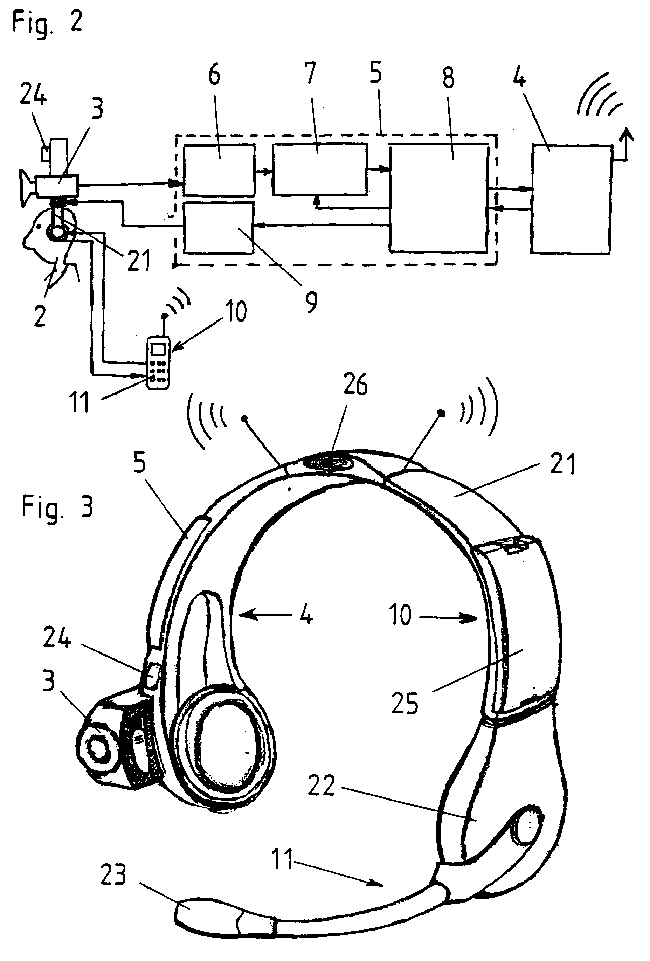

Die Einrichtung umfaßt an der Bedienerseite ein Bildaufnahmegerät 3 in Form einer Videokamera sowie eine Gegensprecheinrichtung 11, die in einem Mobiltelefon 10 realisiert ist. Das Bildaufnahmegerät 3 ist über eine Schnittstelleneinheit 5 (Interface) mit einem mobilen Datenmodem 4 verbunden. Wie Fig. 2 zeigt, umfaßt die Schnittstelleneinheit 5 einen Bildspeicher 6, in dem das vom Bildaufnahmegerät kommende Videosignal festgehalten wird. In einem an den Bildspeicher 6 anschließenden Kompressionsblock 7 werden die Videosignale dann derart komprimiert, daß die resultierende Datenrate der zur Verfügung stehenden Übertragungsrate des Datenmodems 4 angepaßt ist.

Sowohl die Bildsignale als auch die Tonsignale werden über ein Mobiltelefonnetz 16, insbesondere das GSM-Netz, insbesondere in getrennten Kanälen 17, 18 drahtlos an die Leitstelle 12 übertragen, in der ein mit einer Steuereinheit 14 verbundenes Bildwiedergabegerät 13 sowie eine zweite Gegensprechanlage 15 vorgesehen sind. Die Steuereinheit 14 und das Bildwiedergabegerät 13 sind insbesondere in dem dargestellten Computer realisiert, der mit einem zweiten, die eingehenden Bildsignale umsetzenden Datenmodem 19 versehen ist. Die zweite Gegensprechanlage 15 kann in Form eines üblichen Telefons ausgebildet sein, von dem aus über das vorhandene Telefonnetz und eine seiner Mobilfunkstellen 20 die Verbindung zur bedienerseitigen Gegensprecheinrichtung 11 des Mobiltelefons 10 hergestellt werden kann. Die führungsseitige, zweite Gegensprecheinrichtung 15 kann natürlich auch direkt durch ein Mobiltelefon gebildet sein, eine Freisprecheinrichtung aufweisen, usw.

Um die Tätigkeiten des Bedieners nicht durch die Handhabung des Bildaufnahmegerätes 3 zu beeinträchtigen, ist weiters dessen Steuerung von der Leitstelle 12 aus vorgesehen. Über das mobile Datenmodem 4 kann von der Eingabeeinheit der Steuereinheit 14 aus die Kompression des Bildsignals in der Weise gesteuert werden, daß entweder Bilder mit niederer Auflösung und hoher Bildwiederholfrequenz oder Bilder mit hoher Auflösung und niederer Bildwiederholfrequenz an die Leitstelle 12 übertragen werden. Dies erfolgt in der Schnittstelleneinheit 5 mittels einer Multiplexiereinheit 8, in der auch eine Rahmenbildung mit der Abtrennung der einzelnen Informationen (Video-, bzw. Steuerungsinformation, gegebenenfalls auch Sprachinformationen) erfolgt. Weiters wird über das Datenmodem 4 auch das Bildaufnahmegerät 3 gesteuert, wobei die Steuersignale aus der Multiplexiereinheit 8 eine Einheit 9 zur Signalanpassung durchlaufen und an das Bildaufnahmegerät 3 weitergegeben werden.

Fig. 3 zeigt eine Ausführung des bedienerseitigen Teils der Einrichtung zur Bedienerfernführung, in der die wesentlichen Geräte an einem Kopfhörer 21 vorgesehen sind. Am Kopfhörer 21 sind an einer Seite das Bildaufnahmegerät 3 abnehmbar angeordnet eine schematisch angedeutete Beleuchtungseinrichtung 24 und die Schnittstelleneinheit 5 samt Datenmodem 4 vorgesehen. Diese Hälfte umfaßt somit den Bildaufnahme- und -übertragungsteil der Einrichtung. Der das Mobiltelefon 10 aufweisende Gegensprechbereich ist an der anderen Hälfte des Kopfhörers ausgebildet, an der die Gegensprecheinrichtung 11, die durch das Mikrofon 23 und das in zumindest einer Hörmuschel angeordnete Telefon 22 gebildet ist, und eine aufladbare Stromzelle 25 vorgesehen sind. In der Mitte des Kopfhörerbügels kann weiters eine Infrarotschnittstelle 26 ausgebildet sein.

Die Videokamera folgt der Bewegung des Kopfes des Bedieners, sodaß ihr Sichtfeld im wesentlichen dem des Bedieners entspricht. Die Bedienertätigkeit kann daher von der Führungsperson gesehen und gegebenenfalls auch sofort korrigiert werden.

## Patentansprüche

1. Einrichtung zur Bedienerfernführung, die bedienerseitig ein Bildaufnahmegerät (3) und eine Gegensprecheinrichtung (11), und führungsseitig ein Bildbetrachtungsgerät (13) und ebenfalls eine Gegensprecheinrichtung (15) aufweist, wobei die Signalübertragung zwischen den bedienerseitigen und den führungsseitigen Geräten (3, 13; 11, 15) zumindest einen drahtlosen Übertragungsabschnitt (16) umfaßt.

2. Einrichtung nach Anspruch 1, dadurch gekennzeichnet, daß die Übertragung von Sprachsignalen und Bildsignalen im drahtlosen Übertragungsabschnitt (16) über getrennte Kanäle (17, 18) erfolgt.

3. Einrichtung nach Anspruch 1 oder 2, dadurch gekennzeichnet, daß führungsseitig eine Steuereinheit (14) für das Bildaufnahmegerät (3) vorgesehen ist, und die Übertragung der Steuersignale über den Bildübertragungskanal (17) erfolgt.

4. Einrichtung nach Anspruch 2 oder 3, dadurch gekennzeichnet, daß bedienerseitig für die Übertragung der Bild- und der Sprachsignale je ein GSM-Gerät (4, 10) (Global System for Mobile communication) vorgesehen ist.

5. Einrichtung nach Anspruch 4, dadurch gekennzeichnet, daß zwischen dem Bildaufnahmegerät (3) und dem zugeordneten GSM-Gerät (4) ein Interface (5) vorgesehen ist, das einen Bildspeicher (6) und einen Kompressionsblock (7) umfaßt, die die Bilddatenrate der GSM-Datenübertragungsrate anpassen.

6. Einrichtung nach einem der Ansprüche 1 bis 5, dadurch gekennzeichnet, daß alle bedienerseitigen Elemente an einem Kopfhörer (21) oder Helm angeordnet sind.
